# EUROPEAN PATENT APPLICATION

(11) **EP 2 741 521 A1**
(43) Date of publication of application: **11.06.2014**
(21) Application number: 12820487.2
(22) Date of filing: 03.08.2012
(51) Int. Cl.: H04Q 9/00, F24F 11/02

(54) **CONTROL APPARATUS AND CONTROL METHOD FOR ELECTRICAL APPARATUSES**

(30) Priority: 03.08.2011 JP 2011170491
(71) Applicant: Daikin Industries, Ltd., Osaka-shi, Osaka 530-8323 (JP)
(72) Inventor: YAMAGUCHI, Takahiro, Osaka 530-8323 (JP); SAKAGUCHI, Tadashi, Osaka 530-8323 (JP)
(74) Representative: HOFFMANN EITLE
(86) International application number: PCT/JP2012/004962
(87) International publication number: WO 2013/018380

(57) **Abstract**

Convenience of a control device for controlling an operating sate of electrical equipment is enhanced. To achieve the enhanced convenience, a control device (10) for controlling an operating sate of electrical equipment (30) includes a receiver (21), a tough-panel liquid crystal display (22), and an operation controller (25). The receiver (21) receives power demand information transmitted from a broadcast station (15). The liquid crystal display (22) receives user setting information indicating settings for operation of the electrical equipment (30). The operation controller (25) controls the operating state of the electrical equipment (30) in order to adjust power consumption of the electrical equipment (30), based on the power demand information received by the receiver (21) and the user setting information input to the liquid crystal display (22).

## Description

### TECHNICAL FIELD

The present invention relates to control devices for controlling operating states of electrical equipment actuated by electricity and to control systems including such control devices.

### BACKGROUND ART

An existing control device controls an operating state of electrical equipment that is actuated by electricity. Patent Document 1, for example, describes a control device for controlling an operating state of an air conditioner that is a type of electrical equipment. The control device receives a digital broadcast wave and, based on energy saving instruction information issued by digital broadcasting, controls an operating state of an air conditioner such that power consumption of the air conditioner decreases. Patent Document 2 describes a control device that controls an operating state of an air conditioner by using information transmitted by digital broadcasting.

### CITATION LIST

### PATENT DOCUMENTS

[Patent Document 1] Japanese Unexamined Patent Publication No. 2004-112371
[Patent Document 2] Japanese Unexamined Patent Publication No. 2003-324665

### SUMMARY OF THE INVENTION

### TECHNICAL PROBLEM

Upon reception of energy saving instruction information, the above-described existing control devices uniformly perform operation for reducing power consumption of air conditioners. Thus, demands of users on air conditioners are not taken into consideration in operation of the control devices.

This situation will now be specifically described. For example, in some cases, a plurality of air conditioners are installed in a house, a resident (i.e., a user of air conditioners) accepts an increase in target temperature of an air conditioner installed in a living room for power saving but does not want to increase the target temperature of cooling operation of an air conditioner installed in a room of an elderly person in order to avoid heatstroke. However, existing control devices cannot meet such individual demands of the user.

It is therefore an object of the present invention to provide a control device and a control system that control an operating state of electrical equipment such that operation of electrical equipment is controlled in consideration of demands of a user on the electrical equipment in order to enhance convenience of the control device and the control system.

### SOLUTION TO THE PROBLEM

A first aspect of the invention is directed to a control device that is connected to electrical equipment (30) configured to be actuated by electricity and controls an operating state of the electrical equipment (30). The control device includes: a receiver (21) configured to receive power demand information on a maximum amount of power supply and an amount of power usage transmitted by broadcasting; an input section (22) to which a user of the electrical equipment (30) inputs user setting information indicating settings for operation of the electrical equipment (30); and an operation controller (25) configured to control the operating state of the electrical equipment (30) in order to adjust power consumption of the electrical equipment (30), based on the power demand information received by the receiver (21) and the user setting information input to the input section (22).

In the first aspect, the receiver (21) receives power demand information transmitted by broadcasting. The receiver (21) sends the power demand information to the operation controller (25). When a user of the electrical equipment (30) inputs user setting information to the input section (22), the user setting information is sent to the operation controller (25). The operation controller (25) controls the operating state of the electrical equipment (30) in consideration of the user setting information as well as the power demand information. The operation controller (25) adjusts the operating state of the electrical equipment (30) such that power consumption of the electrical equipment (30) varies.

According to a second aspect of the invention, in the control device of the first aspect, a supply margin that is an index relating to a difference between the maximum amount of power supply and the amount of power usage is either received by the receiver (21) as the power demand information or calculated by the operation controller (25) from the power demand information, and the operation controller (25) is capable of determining a plurality of operating states of the electrical equipment (30) in accordance with the supply margin.

In the second aspect, the operation controller (25) is capable of determining a plurality of operating states of the electrical equipment (30) in accordance with the supply margin. For example, the operation controller (25) controls the operating state of the electrical equipment (30) such that power consumption thereof slightly decreases in a state where the difference between the maximum amount of power supply and the amount of power usage slightly decreases, whereas the operation controller (25) controls the operating state of the electrical equipment (30) such that power consumption thereof greatly degreases in a state where the maximum amount of power supply hardly differs from the amount of power usage. The supply margin to be used for control on the operating state of the electrical equipment (30) by the operation controller (25) may be a margin transmitted by broadcasting and received by the receiver (21) or a margin calculated by the operation controller (25) based on the power demand information received by the receiver (21).

According to a third aspect of the invention, in the control device of the first aspect, the power demand information received by the receiver (21) includes expected demand information on a future expected value of the amount of power usage.

In the third aspect, the power demand information transmitted by broadcasting includes expected demand information, and this expected demand information is received by the receiver (21).

According to a fourth aspect of the invention, in the control device of the third aspect, the operation controller (25) determines an operation schedule specifying an operating state of the electrical equipment (30) for each time, based on the expected demand information.

In the fourth aspect, the expected demand information is input to the operation controller (25). Thus, the operation controller (25) can control the operating state of the electrical equipment (30) in accordance with a change in the amount of power usage in future. For this control, the operation controller (25) of this aspect determines an operation schedule of the electrical equipment (30) based on the expected demand information, and controls the operating state of the electrical equipment (30) based on this operation schedule.

For example, in a case where the electrical equipment (30) connected to the control device (20) is a heat-pump electric water heater, the operation controller (25) of the fourth aspect can determine the following operation schedules. That is, if it is expected that the difference between the maximum amount of power supply and the amount of power usage is small from 1 p.m. to 5 p.m. based on the expected demand information, the operation controller (25) determines an operation schedule in which "the electric water heater is forced to execute water-heating operation by 1 p.m. in order to obtain an intended amount of hot water in a tank, water-heating operation of the electric water heater is inhibited from 1 p.m. to 5 p.m., and water-heating operation of the electric water heater is permitted as necessary after 5 p.m." and controls the operating state of the electric water heater based on this operation schedule.

Determination of an operation schedule of the electrical equipment (30) based on the expected demand information by the operation controller (25) as in the fourth aspect, enables the electrical equipment (30) to be actuated except for a period in which the amount of power usage is large, thereby achieving a peak shift of a power demand.

According to a fifth aspect of the invention, in the control device of the first aspect, the operation controller (25) creates one or more proposed changes of the operating state of the electrical equipment (30) based on the power demand information, the input section (22) receives, as the user setting information, information indicating whether to adopt one of the one or more proposed changes of the operating state of the electrical equipment (30) created by the operation controller (25), and the operation controller (25) determines whether or not the operating state of the electrical equipment (30) is changed based on the user setting information..

In the fifth aspect, the operation controller (25) creates one or more proposed changes of the operating state of the electrical equipment (30), and the user determines whether to adopt the proposed changes. Specifically, the operation controller (25) may create only one proposed change of the operating state of the electrical equipment (30) so that the user determines whether to adopt the proposed change, or the operation controller (25) may create a plurality of proposed changes of the operating state of the electrical equipment (30) so that the user determines which one of the proposed changes is adopted. When the determination result of the user is input to the input section (22) as user setting information, the operation controller (25) determines whether to change the operating state of the electrical equipment (30) based on the user setting information.

According to a sixth aspect of the invention, in the control device of the first aspect, the operation controller (25) stores undisclosed setting information that is setting information for use in control of the operating state of the electrical equipment (30) and is not changed by the user, the receiver (21) receives update information of the undisclosed setting information assigned with an identification sign specifying an individual control device, and the operation controller (25) updates the undisclosed setting information based on the update information assigned with an identification sign associated with the operation controller (25).

In the sixth aspect, the operation controller (25) stores undisclosed setting information. This undisclosed setting information is setting information that is necessary for the operation controller (25) to control the operating state of the electrical equipment (30) and causes a trouble when being arbitrarily changed by the user. The undisclosed setting information cannot be changed by the user. However, when the receiver (21) receives update information assigned with an identification sign associated with this receiver (21), the operation controller (25) updates the undisclosed setting information based on the update information. That is, since broadcasting is one-way communication, the receiver (21) receives not only update information assigned with an identification sign associated with this receiver (21) but also update information assigned with an identification sign associated with another control device. Then, the operation controller (25) ignores update information assigned with identification signs associated with other control devices, and updates the undisclosed setting information based on update information assigned with an identification sign associated to this operation controller (25).

According to a seventh aspect of the invention, the control device of any one of the first through sixth aspects further includes a history recording section (26) configured to record details of control performed by the operation controller (25) on the electrical equipment (30) as an operation history.

In the seventh aspect, the history recording section (26) stores an operation history. Thus, details of control performed on the electrical equipment (30) by the operation controller (25) in the past are accumulated in the history recording section (26) as the operation history.

An eighth aspect of the invention is directed to a control system for controlling electrical equipment, and the control system includes: the control device (20) of any one of the first through seventh aspects; and a transmitter (15) configured to issue the power demand information by broadcasting.

In the eighth aspect, the transmitter (15) and the control device (20) constitute the control system (10). The transmitter (15) transits power demand information by broadcasting. The receiver (21) of the control device (20) receives the power demand information transmitted from the transmitter (15).

### ADVANTAGES OF THE INVENTION

According to an aspect of the present invention, the control device (20) of the electrical equipment (30) includes the input section (22). User setting information input by a user of the electrical equipment (30) to the input section (22) is sent to the operation controller (25). The operation controller (25) controls the operating state of the electrical equipment (30) in consideration of both power demand information and the user setting information. Thus, in this aspect, the operating state of the electrical equipment (30) can be controlled in consideration of demands of the user input to the input section (22) as the user setting information, thereby enhancing convenience of the control device (20).

In the second aspect, the operation controller (25) is capable of determining a plurality of operating states of the electrical equipment (30) in accordance with the supply margin. Thus, in this aspect, the operating state of the electrical equipment (30) can be finely controlled in accordance with the supply margin that is an index relating to the difference between the maximum amount of power supply and the amount of power usage. As a result, the amount of power usage can be reduced below the maximum amount of power supply with a minimum influence on the user of the electrical equipment (30).

In the third aspect, the expected demand information on a future expected value of the amount of power usage is received by the receiver (21). Thus, the operation controller (25) can control the operating state of the electrical equipment (30) by using this expected demand information.

In the fourth aspect, the operation controller (25) determines an operation schedule of the electrical equipment (30) based on the expected demand information, and controls the operating state of the electrical equipment (30) depending on the operation schedule. Thus, in this aspect, the electrical equipment (30) can be actuated except for a period in which the amount of power usage is large, thereby achieving a peak shift of a power demand.

In the fifth aspect, the operation controller (25) creates one or more proposed changes of the operating state of the electrical equipment (30), and the user determines whether to adopt the proposed changes. The determination result is input to the input section (22) as user setting information. That is, when the user inputs user setting information to the input section (22), it is necessary to determine only whether to adopt the proposed changes of the operating state of the electrical equipment (30) created by the operation controller (25). Thus, in this aspect, issues to be considered when the user inputs user setting information to the input section (22) can be reduced, thereby reducing the burden on the user.

In the sixth aspect, the receiver (21) receives update information of undisclosed setting information assigned with an identification sign individually specifying the control device (20), and the operation controller (25) updates the undisclosed setting information based on update information assigned with an identification sign associated with this operation controller (25). Thus, the undisclosed setting information of each control device (20) can be individually updated only by issuing update information by broadcasting, thereby simplifying maintenance of the control device (20).

### BRIEF DESCRIPTION OF THE DRAWINGS

[FIG. 1] FIG. 1 is a block diagram schematically illustrating a configuration of a control device and a control system according to an embodiment.
[FIG. 2] FIG. 2 is a block diagram schematically illustrating a control device and a control system according to a first modified example of the embodiment.

### DESCRIPTION OF EMBODIMENTS

An embodiment of the present invention will be described in detail hereinafter with reference to the drawings.

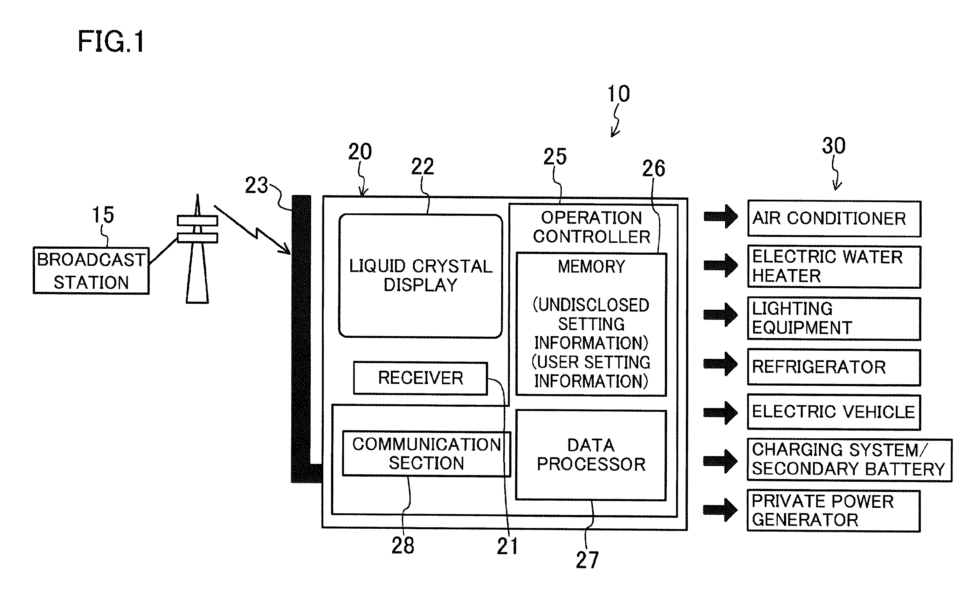

As illustrated in FIG. 1, a control device (20) according to this embodiment is a device for controlling an operating state of electrical equipment (30) that is actuated by electricity. The control device (20) receives information sent by broadcasting and controls the operating state of the electrical equipment (30) by utilizing the received information. In this control, the control device (20) adjusts the operating state of the electrical equipment (30) such that power consumption of the electrical equipment (30) varies. The control device (20) constitutes a control system (10) together with a broadcast station (15) that issues information by broadcasting.

The broadcast station (15) serving as a transmitter issues common information to all the control devices (20) located in a broadcast area. Specifically, the broadcast station (15) issues a power shortage alarm, power demand information, and individual distribution information. The broadcast station (15) also issues times. The broadcast station (15) transmits these types of information by using broadcast waves of, for example, digital terrestrial broadcasting, broadcasting satellite (BS) digital broadcasting, and FM multiplex broadcasting.

The power shortage alarm is information that is issued when the amount of power usage reaches 97% or more of the maximum amount of power supply. The power shortage alarm is issued every time the amount of power usage reaches 97% or more of the maximum amount of power supply.

The power demand information is information on the maximum amount of power supply and the amount of power usage. The power demand information includes information on a currently measured amount and an expected amount of power usage. The power demand information is issued after every lapse of a predetermined time (e.g., every one hour).

In this embodiment, a power usage percentage is issued as power demand information from the broadcast station (15). The power usage percentage is the ratio (D/S) of the power usage amount D to the maximum amount S of power supply and is expressed in units of percentage. Based on the power usage percentage, the amount of power that an electric power company can still supply (i.e., the difference between the maximum amount of power supply and the amount of power usage) can be determined. Thus, the power usage percentage corresponds to a "supply margin that is an index relating to the difference between the maximum amount of power supply and the amount of power usage."

In this embodiment, the broadcast station (15) issues, as power demand information, a currently measured value of the power usage percentage and an expected value of the power usage percentage for every one hour until, for example, 12 hours later. The expected value of the power usage percentage issued from the broadcast station (15) corresponds to expected demand information.

The individual distribution information is update information for updating undisclosed setting information, which will be described later. The update information serving as the individual distribution information is assigned with an identification sign specifying an individual control device (20). Each control devices (20) has its specific identification sign. That is, one identification sign is associated with a specific one of the control devices (20). The individual distribution information is issued in a spare time in which neither the power shortage alarm nor the power demand information is issued.

The control device (20) includes a receiver (21), a liquid crystal display (22), and an operation controller (25). The control device (20) also includes an antenna (23) for receiving a broadcast wave.

The receiver (21) demodulates the broadcast wave received by the antenna (23), and outputs an obtained power shortage alarm, obtained power demand information, and obtained individual distribution information to the operation controller (25). The power shortage alarm, the power demand information, and the individual distribution information are issued together with other information (e.g., video information and audio information of television broadcasting) in some cases. In this case, the receiver (21) also selects necessary information (i.e., the power shortage alarm, the power demand information, and the individual distribution information in this embodiment) from the demodulated information.

The liquid crystal display (22) is a so-called touch-panel liquid crystal panel. This liquid crystal display (22) serves both as a display section that displays information to a user and as an input section to which the user inputs user setting information, which will be described later.

The operation controller (25) includes a memory (26), a data processor (27), and a communication section (28). In the memory (26), undisclosed setting information, user setting information, and an identification sign are recorded. The identification sign recorded in the memory (26) is specific to the control device (20) including this memory (26).

The memory (26) of the operation controller (25) also serves as a history recording section. Specifically, operation history indicating details of control performed on the electrical equipment (30) by the control device (20) is recorded in the memory (26). The operation history recorded in the memory (26) is undisclosed information that is not disclosed to the user.

The undisclosed setting information is setting information that is necessary for the operation controller (25) to control the operating state of the electrical equipment (30) and causes a trouble when being arbitrarily changed by the user. Examples of the undisclosed setting information includes an address of a location of electrical equipment (30) connected to the control device (20), the type of the electrical equipment (30) connected to the control device (20) (e.g., an air conditioner, an electric water heater, lighting equipment, a refrigerator), an application (e.g., for a household use or an industrial use) of the electrical equipment (30) connected to the control device (20), and details of a contract of the user with an electric power company.

The user setting information is information input by the user with the liquid crystal display (22), and indicates a demand of the user regarding operation of the electrical equipment (30). Details of the user setting information and a procedure in which the user inputs the user setting information will be described in detail later.

The data processor (27) generates a control signal for changing the operating state of the electrical equipment (30), based on the power shortage alarm and the power demand information output from the receiver (21) and on the undisclosed setting information and the user setting information recorded in the memory (26).

The communication section (28) outputs the control signal generated by the data processor (27) to the electrical equipment (30) connected to the control device (20).

The control device (20) can be connected to various types of electrical equipment (30). Examples of the electrical equipment (30) connected to the control device (20) include an air conditioner, an electric water heater using an electric heater or a heat pump as a heat source, lighting equipment, a refrigerator, an electric vehicle, a charging system including a secondary battery, and a private power generator. In particular, a plurality of air conditioners or a plurality of pieces of lighting equipment may be connected to one control device (20).

### -Operation-

Operation of the control device (20) will now be described. The control device (20) performs a control operation for peak shaving of reducing the maximum amount of power usage and a control operation for a peak shift of reducing the variation width of the amount of power usage. The control device (20) also performs operation of updating the undisclosed setting information, when necessary.

### <Control Operation for Peak Shaving>

The control device (20) performs, as the control operation for peak shaving, the operation of changing the operating state of the electrical equipment (30) such that current power consumption of the electrical equipment (30) decreases.

As described above, the operation controller (25) of the control device (20) has received the power usage percentage received by the receiver (21) of this control device (20) as the power demand information. Based on the currently measured value of the power usage percentage, the operation controller (25) creates a proposed change of the operating state of the electrical equipment (30). In accordance with the type of the electrical equipment (30) recorded in the memory (26) as the undisclosed setting information, the operation controller (25) creates a proposed change of the operating state of the electrical equipment (30).

Examples of the proposed change created by the operation controller (25) will be described.

In a case where the electrical equipment (30) to be controlled is an air conditioner, the operation controller (25) creates a proposed change of "increasing the target temperature of cooling operation of the air conditioner by 2°C" when the currently measured value of the power usage percentage exceeds 90%, and creates a proposed change of "stopping operation of the air conditioner" when the currently measured value of the power usage percentage exceeds 95%.

In a case where the electrical equipment (30) to be controlled is lighting equipment, the operation controller (25) creates a proposed change of "turning off lighting equipment at a window side" when the currently measured value of the power usage percentage exceeds 90%, and creates a proposed change of "turning all the lighting equipment off" when the currently measured value of the power usage percentage exceeds 95%. In this manner, the operation controller (25) creates a plurality of proposed changes of the operating state of the electrical equipment (30) in accordance with the value of the power usage percentage indicating the supply margin.

A proposed change created by the operation controller (25) is displayed on the liquid crystal display (22). The control device (20) notifies the user by, for example, sound that the proposed change is displayed on the liquid crystal display (22). The user determines whether to adopt the proposed changes on the liquid crystal display (22), and inputs the determination result to the liquid crystal display (22).

For example, in a case where the proposed change of "increasing the target temperature of cooling operation of the air conditioner by 2°C" is displayed on the liquid crystal display (22), the user input "yes" if the user accepts the proposed change, and inputs "no" if the user does not accept the proposed change. In a situation where a plurality of air conditioners are connected to the control device (20), the control device (20) may be configured such that the user can input whether to adopt the proposed change for each of the air conditioner. In this case, it is possible for the user to accept a change in target temperature for an air conditioner in a living room and input "yes" while not accepting a change in target temperature for an air conditioner in a room of an elderly person and input "no". Information on whether the user accepts a proposed change or not is recorded in the memory (26) as user setting information.

Based on the user setting information recorded in the memory (26), the operation controller (25) generates a control signal and outputs the control signal to the electrical equipment (30). For example, in a situation where a plurality of air conditioners are connected to the control device (20), if proposed change of "increasing the target temperature of cooling operation of the air conditioner by 2°C" is accepted for one or more of the air conditioners and is not accepted for the other air conditioners, the operation controller (25) outputs a control signal for increasing the target temperatures in cooling operation to the air conditioners for which the proposed change is accepted, and does not output a control signal to the air conditioners for which the proposed change is not accepted. In this case, the operation controller (25) records details of an executed control operation in the memory (26) as an operation history. In this example, the operation controller (25) records, as an operation history in the memory (26), that a control signal for increasing the target temperature in cooling operation is output to some of the air conditioners and no control signal is output to the other air conditioners.

In some cases, the broadcast station (15) issues a power shortage alarm. As described above, the power shortage alarm is issued when the amount of power usage reaches 97% or more of the maximum amount of power supply. Thus, in a case where the power shortage alarm is issued, power consumption of the electrical equipment (30) needs to be reduced quickly.

To meet the necessity, as soon as the receiver (21) receives the power shortage alarm, the operation controller (25) of the control device (20) performs control operation of reducing power consumption of the electrical equipment (30). In the control operation, the operation controller (25) generates and outputs, for example, a control signal for forcefully stopping operation of an air conditioner, a control signal for forcefully turning off lighting equipment, and a control signal for inhibiting water-heating operation of the electric water heater. At this time, the control device (20) does not ask the user whether to accept a proposed change of the operating state of the electrical equipment (30), and forcefully changes the operating state of the electrical equipment (30). Instead, the control device (20) displays a change of the operating state of the electrical equipment (30) on the liquid crystal display (22).

### <Control Operation for Peak Shift>

The control device (20) performs, as the control operation for peak shift, the operation of changing the operating state of the electrical equipment (30) such that the variation width of the amount of power usage in future decreases.

As described above, the operation controller (25) of the control device (20) has received the expected value of the power usage percentage received by the receiver (21) as the power demand information. Based on the expected value of the power usage percentage, the operation controller (25) creates an operation schedule specifying an operating state of the electrical equipment (30) for each time. In accordance with the type of the electrical equipment (30) recorded in the memory (26) as undisclosed setting information, the operation controller (25) also creates an operation schedule associated with the electrical equipment (30).

Examples of the proposed change created by the operation controller (25) will be described.

In a case where the electrical equipment (30) to be controlled is a heat-pump electric water heater, the operation controller (25) determines the following operation schedules. When the power usage percentage is expected to be large (i.e., a margin of electric power amount of supply is expected to be small) from 1 p.m. to 5 p.m. based on the expected value of the power usage percentage, the operation controller (25) determines an operation schedule in which "the electric water heater is forced to execute water-heating operation by 1 p.m. to obtain an intended amount of hot water in a tank, water-heating operation of the electric water heater is inhibited from 1 p.m. to 5 p.m., and water-heating operation of the electric water heater is permitted as necessary after 5 p.m." and controls the operating state of the electric water heater based on this operation schedule.

In this case, the operation controller (25) determines an operation schedule of an electric vehicle to be controlled in which "charging is performed by 1 p.m. to fully charge a secondary battery, charging is inhibited from 1 p.m. to 5 p.m., and charging is permitted as necessary after 5 p.m." and controls the operating state of the electric vehicle based on this operation schedule.

In this case, the operation controller (25) determines an operation schedule of a charging system to be controlled in which "charging is performed by 1 p.m. to fully charge a secondary battery, charging is inhibited from 1 p.m. to 5 p.m. to allow the second battery to discharge, and charging is permitted as necessary after 5 p.m." and controls the operating state of the charging system based on this operation schedule.

In this case, the operation controller (25) determines an operation schedule of a private power generator to be controlled in which "operation is always performed from 1 p.m. to 5 p.m." and controls the operating state of the private power generator based on this operation schedule.

In this manner, determination of operation schedules of the electrical equipment (30) by the operation controller (25) based on expected values of the power usage percentage enables the electrical equipment (30) to be actuated except for a period in which the amount of power usage is large, thereby achieving a peak shift of a power demand.

The operation controller (25) records details of control operation performed on the electrical equipment (30) based on an operation schedule in the memory (26) as an operation history.

### <Operation of Updating Undisclosed Setting Information>

As described above, the broadcast station (15) issues individual distribution information by broadcasting. The receiver (21) of the control device (20) also receives the individual distribution information. It should be noted that the broadcast station (15) sequentially issues individual distribution information to the control devices (20) located in the broadcast area thereof. Thus, the individual distribution information received by the receiver (21) includes not only individual distribution information on a control device (20) including this receiver (21) bot also individual distribution information on other control devices (20).

The receiver (21) compares an identification sign assigned to the received individual distribution information with an identification sign recorded in the memory (26). In a case where these two identification signs coincide with each other, it is determined that the individual distribution information received by the receiver (21) is issued to the control device (20) including this receiver (21). Thus, in this case, the receiver (21) outputs the received individual distribution information to the operation controller (25). On the other hand, in a case where the two identification signs do not coincide with each other, it is determined that the individual distribution information received by the receiver (21) is not issued to the control device (20) including this receiver (21). Thus, in this case, the receiver (21) ignores the received individual distribution information.

When receiving individual distribution information from the receiver (21), the operation controller (25) updates undisclosed setting information in the memory (26) based on the received information. For example, when details of a contract of the user with an electric power company are changed, the changed details of the contract are transmitted to the control device (20) as individual distribution information, and details of the contract recorded in the memory (26) of the control device (20) as undisclosed setting information are updated.

### -Utilization of Operation History-

In the control device (20) of this embodiment, details of control performed by the operation controller (25) on the electrical equipment (30) are recorded in the memory (26) as an operation history. The operation history recorded in the memory (26) is extracted to a portable terminal of a meter reader when the meter reader visits the user for reading an electric power meter. Transfer of the operation history from the control device (20) to the portable terminal of the meter reader may be carried out via infrared-ray communication or wire communication using a communication cable, or may be carried out via a recording medium such as a memory card. In a case where the user makes a contract with an electric power company to "discount the fee depending on the degree of effort at power saving," the electric power company determines the amount of discount or the discount rate based on the operation history output from the control device (20).

### -Advantage of First Embodiment-

The control device (20) of this embodiment includes a touch-panel liquid crystal display (22) as an input section. User setting information input from a user of the electrical equipment (30) to the liquid crystal display (22) is sent to the operation controller (25). Then, the operation controller (25) controls the operating state of the electrical equipment (30) in consideration of both a power usage percentage as power demand information and user setting information. Thus, according to this embodiment, the operating state of the electrical equipment (30) can be controlled in consideration of demands of the user input to the liquid crystal display (22) as the user setting information, thereby enhancing convenience of the control device (20).

In the control device (20) of this embodiment, the operation controller (25) can determine a plurality of operating states of the electrical equipment (30) in accordance with the power usage percentage that is a supply margin. Thus, according to this embodiment, the operating state of the electrical equipment (30) can be finely controlled in accordance with the power usage percentage that is an index relating to the difference between the maximum amount of power supply and the amount of power usage. As a result, the amount of power usage can be reduced below the maximum amount of power supply with a minimum influence on the user of the electrical equipment (30).

In the control device (20) of this embodiment, the receiver (21) receives an expected value of the power usage percentage. The operation controller (25) of the control device (20) determines an operation schedule of the electrical equipment (30) based on the received expected value of the power usage percentage, and controls the operating state of the electrical equipment (30) based on this operation schedule. Accordingly, in this embodiment, the electrical equipment (30) can be actuated except for a period in which the amount of power usage is large, thereby achieving a peak shift of a power demand.

In the control device (20) of this embodiment, the operation controller (25) creates a proposed change of the operating state of the electrical equipment (30), and the user determines whether to adopt the proposed change. The determination result is record in the memory (26) as user setting information. That is, in a case where the user inputs user setting information to the liquid crystal display (22), it is necessary only to determine whether to adopt the proposed change of the operating state of the electrical equipment (30) created by the operation controller (25). Thus, in this embodiment, the number of issues to be considered when the user is input user setting information to the liquid crystal display (22) can be reduced, thereby reducing the burden on the user.

In the control device (20) of this embodiment, the receiver (21) receives individual distribution information, and the operation controller (25) updates undisclosed setting information based on individual distribution information to which an identification sign associated with this control device (20) is assigned. Thus, the undisclosed setting information of each control device (20) can be individually updated only by issuing individual distribution information by broadcasting, thereby simplifying maintenance of the control device (20).

### -First Modified Example of Embodiment-

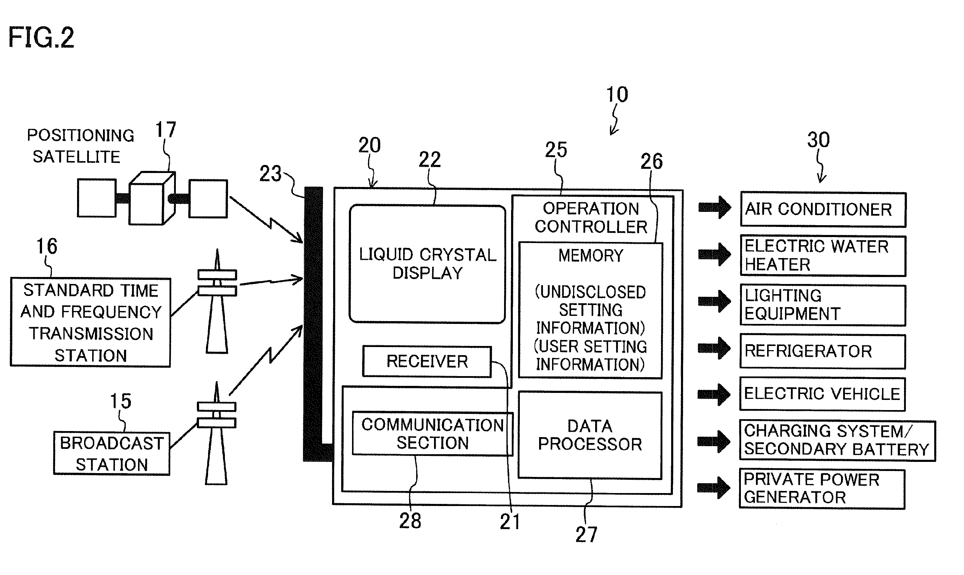

As illustrated in FIG. 2, the control device (20) of this embodiment may receive time information from a standard time and frequency transmission station (16) and may also receive location information from a positioning satellite (17), as well as a broadcast wave from the broadcast station (15).

In a case where the control device (20) receives time information from the standard time and frequency transmission station (16), the broadcast station (15) does not need to issue time information. However, the control device (20) may receive time information from both of the standard time and frequency transmission station (16) and the broadcast station (15). In this case, if the time information from the standard time and frequency transmission station (16) coincides with the time information from the broadcast station (15), the control device (20) determines that the information received from the broadcast station (15) is correct, and if the time information from the standard time and frequency transmission station (16) is different from the time information from the broadcast station (15), the control device (20) determines that the information received from the broadcast station (15) is false.

In a case where the control device (20) receives location information from the positioning satellite (17), when a technician installs the control device (20), the technician does not need to record an address of an installation site of the electrical equipment (30) in the memory (26). In this case, location information received by the receiver (21) from the positioning satellite (17) is recorded in the memory (26).

### -Second Modified Example of Embodiment-

In this embodiment, information except the power usage percentage may be issued from the broadcast station (15) as power demand information. For example, the broadcast station (15) may issue, as power demand information, the maximum amount of power supply, a currently measured value of the amount of power usage, and an expected future value of an amount of power usage. The control device (20) receives these values as power demand information and calculates a power usage percentage from the received values. That is, the control device (20) calculates a currently measured value of a power usage percentage by using the maximum amount of power supply and the currently measured value of the amount of power usage. The control device (20) also calculate an expected value of a future power usage percentage by using the maximum amount of power supply and the expected future value of the amount of power usage. Using the calculated currently measured value of power usage percentage and the calculated expected future value, the control device (20) performs the above-described expected control operation.

The maximum amount of power supply can vary depending on time. The variation of the maximum amount of power supply is due to, for example, an output variation of pumped-storage hydroelectricity, an output variation of photovoltaics, a variation in the amount of power purchased from a private power generator in, for example, a factory, or a halt of an electric power station for inspection and maintenance.

Thus, to enhance the precision in the expected value of the power usage percentage, a future planned value of the maximum amount of power supply needs to be used for calculation of the precise expected value. In this case, the broadcast station (15) issues, as power demand information, the current value of the maximum amount of power supply, the future planned value of the maximum amount of power supply, the currently measured amount of the amount of power usage, and a future expected value of the amount of power usage. The control device (20) receives these values as power demand information, and calculates a power usage percentage from the received values. That is, the control device (20) calculates the currently measured value of the power usage percentage by using the current value of the maximum amount of power supply and the currently measured amount of the amount of power usage. The control device (20) also calculates a future expected value of the power usage percentage by using the future planned value of the maximum amount of power supply and the future expected value of the amount of power usage. The control device (20) performs the above-described control operation by using the calculated currently measured value of the power usage percentage and the calculated future expected value.

### -Third Modified Example of Embodiment-

As described above, the control device (20) of this embodiment performs control operation for a peak shaving. In this process, in the control device (20), a proposed change of the operating state of the electrical equipment (30) created by the operation controller (25) is displayed on the liquid crystal display (22), and the user inputs the user's intention whether to adopt the proposed change to the liquid crystal display (22).

Specifically, in a case where the electrical equipment (30) to be controlled is an air conditioner, the operation controller (25) creates a proposed change of "increasing the target temperature of cooling operation of the air conditioner by 2°C" when the currently measured value of the power usage percentage exceeds 90%. The liquid crystal display (22) displays a proposed change concerning the operating state of the air conditioner. Then, the user inputs "yes" if the user accepts the proposed change, and inputs "no" if the user does not accept the proposed change.

On the other hand, the control device (20) of this embodiment may be configured such that a plurality of proposed changes concerning the operating state of the electrical equipment (30) is displayed on the liquid crystal display (22). In this case, the user inputs a number corresponding to a requested proposed change to the liquid crystal display (22). Then, information specifying the proposed change selected by the user is recorded in the memory (26) as user setting information.

An example of control operation performed by a control device (20) of this modified example will be described. In a case where the electrical equipment (30) to be controlled is an air conditioner, the operation controller (25) creates a first proposed change of "increasing the target temperature of cooling operation of the air conditioner by 1°C," a second proposed change of "increasing the target temperature of cooling operation of the air conditioner by 2°C," and a third proposed change of "stopping operation of the air conditioner," when the currently measured value of the power usage percentage exceeds 90%. The liquid crystal display (22) displays the first through third proposed changes concerning the operating state of the air conditioner. Then, the user inputs "1" when adopting the first proposed change, "2" when adopting the second proposed change, and "3" when adopting the third proposed change, to the liquid crystal display (22). For example, in a case where the user inputs "2" to the liquid crystal display (22), the user's demand of "adopting the second proposed change and refusing the first and third proposed changes" is input to the control device (20). In this case, information indicating that the user selected the second proposed change is recorded in the memory (26) as user setting information.

### -Fourth Modified Example of Embodiment-

The control device (20) of this embodiment may be configured to record the priority order of the electrical equipment (30) to be stopped for power saving in the memory (26) as user setting information, and to control the operating state of the electrical equipment (30) based on the power usage percentage received by the receiver (21) and the priority order recorded in the memory (26).

An example of control operation performed by a control device (20) of this modified example will be described. In a case where an air conditioner, lighting equipment, and a refrigerator are connected to the control device (20), the user inputs, to the liquid crystal display (22), information indicating that the priority order of the air conditioner is "1", the priority order of the lighting equipment is "2", and the priority order of the refrigerator is "3". The priority order input to the liquid crystal display (22) is recorded in the memory (26) as user setting information. Then, the operation controller (25) stops the air conditioner when the currently measured value of the power usage percentage exceeds 90%, turning off the lighting equipment when the currently measured value of the power usage percentage exceeds 95%, and stops the refrigerator when the currently measured value of the power usage percentage exceeds 97%. That is, in this case, the refrigerator having the lowest priority order in stopping continues to operate until the currently measured value of the power usage percentage of exceeds 97%.

The foregoing embodiment and the modified examples thereof are merely preferred examples in nature, and are not intended to limit the scope, applications, and use of the invention.

### INDUSTRIAL APPLICABILITY

As described above, the present invention is useful for a control device for controlling the operating state of electrical equipment that is actuated by electricity and a control system including the control device.

### DESCRIPTION OF REFERENCE CHARACTERS

- 10: control system
- 15: broadcast station (transmitter)
- 20: control device
- 21: receiver
- 22: liquid crystal display (input section)
- 25: operation controller
- 26: memory (history recording section)
- 30: electrical equipment

## Claims

1. A control device that is connected to electrical equipment (30) configured to be actuated by electricity and controls an operating state of the electrical equipment (30), the control device comprising:
a receiver (21) configured to receive power demand information on a maximum amount of power supply and an amount of power usage transmitted by broadcasting;
an input section (22) to which a user of the electrical equipment (30) inputs user setting information indicating settings for operation of the electrical equipment (30); and
an operation controller (25) configured to control the operating state of the electrical equipment (30) in order to adjust power consumption of the electrical equipment (30), based on the power demand information received by the receiver (21) and the user setting information input to the input section (22).

2. The control device of claim 1, wherein
a supply margin that is an index relating to a difference between the maximum amount of power supply and the amount of power usage is either received by the receiver (21) as the power demand information or calculated by the operation controller (25) from the power demand information, and
the operation controller (25) is capable of determining a plurality of operating states of the electrical equipment (30) in accordance with the supply margin.

3. The control device of claim 1, wherein
the power demand information received by the receiver (21) includes expected demand information on a future expected value of the amount of power usage.

4. The control device of claim 3, wherein
the operation controller (25) determines an operation schedule specifying an operating state of the electrical equipment (30) for each time, based on the expected demand information.

5. The control device of claim 1, wherein
the operation controller (25) creates one or more proposed changes of the operating state of the electrical equipment (30) based on the power demand information,
the input section (22) receives, as the user setting information, information indicating whether to adopt one of the one or more proposed changes of the operating state of the electrical equipment (30) created by the operation controller (25), and
the operation controller (25) determines whether or not the operating state of the electrical equipment (30) is changed based on the user setting information.

6. The control device of claim 1, wherein
the operation controller (25) stores undisclosed setting information that is setting information for use in control of the operating state of the electrical equipment (30) and is not changed by the user,
the receiver (21) receives update information of the undisclosed setting information assigned with an identification sign specifying an individual control device, and
the operation controller (25) updates the undisclosed setting information based on the update information assigned with an identification sign associated with the operation controller (25).

7. The control device of any one of claims 1 to 6, further comprising
a history recording section (26) configured to record details of control performed by the operation controller (25) on the electrical equipment (30) as an operation history.

8. A control system for electrical equipment, the control system comprising:
the control device (20) of any one of claims 1 to 7; and
a transmitter (15) configured to issue the power demand information by broadcasting.
